# EUROPÄISCHE PATENTSCHRIFT

(11) **EP 0 437 470 B1**
(45) Veröffentlichungstag und Bekanntmachung des Hinweises auf die Patenterteilung: **21.07.1993**
(21) Anmeldenummer: 89911041.5
(22) Anmeldetag: 30.09.1989
(51) Int. Cl.: F16H 1/445, B60K 17/20

(54) **SPERRBARES DIFFERENTIALGETRIEBE**
LOCKABLE DIFFERENTIAL
DIFFERENTIEL CRABOTABLE

(30) Priorität: 05.10.1988 DE 3833785
(43) Veröffentlichungstag der Anmeldung: 24.07.1991
(73) Patentinhaber: ZF FRIEDRICHSHAFEN Aktiengesellschaft, 88038 Friedrichshafen (DE)
(72) Erfinder: PAUL, Michael, D-8390 Passau (DE); WILKS, Eberhard, D-8391 Hutthurm (DE); SIGL, Peter, D-8398 Pocking (DE)
(86) Internationale Anmeldenummer: EP8901151
(87) Internationale Veröffentlichungsnummer: WO9004118

(56) Entgegenhaltungen:
- WO-A-88/08383
- DE-A- 1 930 668
- DE-A- 1 948 616
- DE-A- 3 617 074
- DE-A- 3 808 066
- FR-A- 1 338 200
- GB-A- 1 224 034
- US-A- 2 017 577
- US-A- 4 113 044

## Beschreibung

Die Erfindung betrifft ein Differentialgetriebe mit den Merkmalen:
- Ein axial fester Planetenträger treibt über mindestens ein Planetenrad zwei Zentralräder,
- jedes Zentralrad treibt eine axial bewegliche Abtriebswelle,
- mindestens eine betätigbare Kupplung mit einem axial festen und einem axial beweglichen Kupplungsteil verbindet den Planetenträger mit einer Abtriebswelle,
- der bewegliche Kupplungsteil ist drehfest mit dem Planetenträger verbunden,
- der feste Kupplungsteil ist drehfest mit der Abtriebswelle verbunden,
- ein Getriebegehäuse hat einen Zwischenringteil zwischen einem ersten und zweiten Hauptteil,
- der Planetenträger ist mit einem ersten Lager in dem ersten Hauptteil und mit einem zweiten Lager in dem Zwischenringteil gelagert.

Ein Differentialgetriebe dieser Art wird besonders als Querdifferential zwischen den Antriebsrädern einer Antriebsachse und als Längsdifferential zwischen zwei Antriebsachsen eines Fahrzeugs verwendet. Die Kupplung soll verhindern, daß ein Antriebsrad auf glattem Boden durchdreht.

Wenn äußere Kräfte, beispielsweise eines Doppelkreuzgelenkes zwischen der Abtriebswelle und einem gelenkten Antriebsrad des Fahrzeugs, die Abtriebswelle unter voller Last axial bewegen, übertragen die achsparallelen Mitnahmeflächen der Mitnahmezähne der Abtriebswelle durch Reibung große axiale Kräfte von der Abtriebswelle auf den axial beweglichen Kupplungsteil. Um diese unerwünschten axialen Reibkräfte zu vermeiden, ist bei einer bekannten Anordnung (DE-A-38 08 066, Fig. 2 und 3) der axiale bewegliche Kupplungsteil über eine Mitnahmeverzahnung im Planetenträger gelagert. Die dazu gehörige Betätigungsvorrichtung für die Kupplung ist Bestandteil des Differentialgetriebes. Der axial feststehende Kupplungsteil, der mit der Abtriebswelle drehfest verbunden ist, ist gleichzeitig als Träger von Innenlamellen einer Reibkupplung ausgebildet. Axiale Reibkräfte können hier auf die Reiblamellen und/oder die Lager des Differentialgetriebes wirken.

Bei dem Differentialgetriebe mit Differentialsperre nach der US-A-20 17 577 ist der axial feststehende Kupplungsteil über ein Radialkugellager im Achsgehäuse gelagert. Dieses Kugellager ist für die Abstützung von Axialkräften nicht geeignet.

Der Erfindung liegt die Aufgabe zugrunde, ein Differentialgetriebe der eingangs genannten Art zu schaffen, bei dem der axial bewegliche Kupplungsteil und der axial feststehende Kupplungsteil so angeordnet sind, daß störende Einflüsse durch axiale Reibkräfte ausgeschlossen sind.

Diese Aufgabe wird erfindungsgemäß dadurch gelöst, daß der feste Kupplungsteil mit zwei Axiallagern axial fest zu dem zweiten Hauptteil gehalten ist. Bei dieser Lösung ist sichergestellt, daß sowohl der axial bewegliche als auch der axial feststehende Kupplungsteil frei von axialen Reibkräften sind, so daß störende Einflüsse auf eine der Reibkupplungen des Differentialgetriebes bzw. die stufenlos steuerbare Reibkupplung zur Verhindung des Planetenträgers mit der Abtriebswelle ausgeschlossen sind.

Ein Differentialgetriebe nach Anspruch 2 und Anspruch 3 kann so gesteuert und geregelt werden, daß es sowohl einen freien Drehzahlausgleich (mit minimalem Reibdrehmoment) als auch einen Antrieb mit voller Motorleistung über ein einziges Antriebsrad (mit maximalem Reibdrehmoment) möglich macht.

Mit den Merkmalen nach Anspruch 4 kann als betätigbare Kupplung eine Reibkupplung klein gebaut werden, weil die Bremsen als Lenkbremsen betätigt werden und damit auch schon allein ein Durchdrehen eines Antriebsrades verhindern können.

Mit den Merkmalen nach Anspruch 5 genügt eine einzige Bremse für mindestens zwei Antriebsräder, weil die Kupplung ein Bremsdrehmoment der Bremse auf beide Abtriebswellen des Differentialgetriebes überträgt.

In der Zeichnung sind bevorzugte Ausführungsbeispiele nach der Erfindung dargestellt.
- Fig. 1: zeigt ein erstes Differentialgetriebe,
- Fig. 2: zeigt ein weiteres Differentialgetriebe,
- Fig. 3: zeigt ein Differentialgetriebe nach Anspruch 4,
- Fig. 4: zeigt ein Differentialgetriebe nach Anspruch 5.

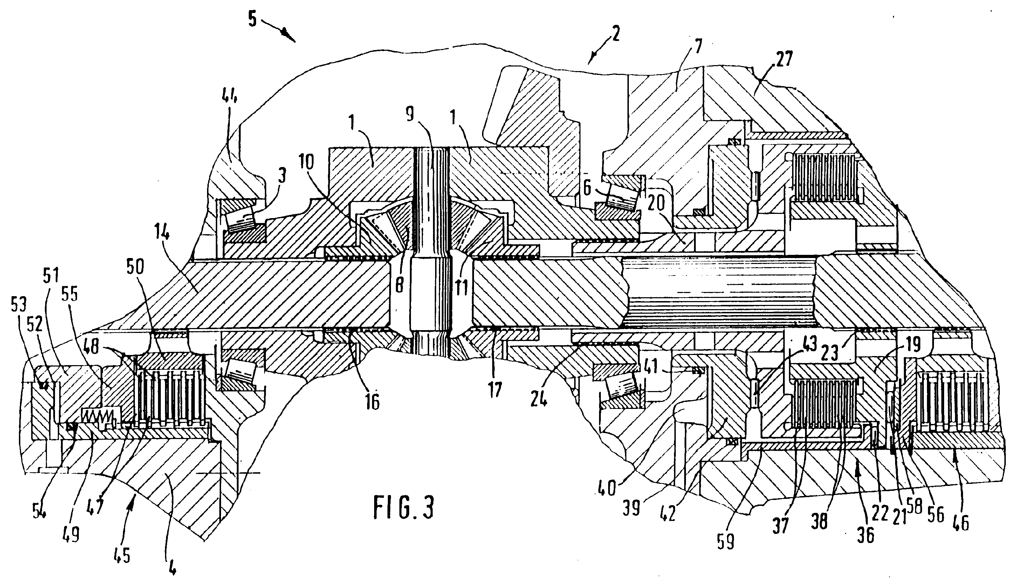

- Fig. 3: zeigt ein Differentialgetriebe nach Anspruch 6,

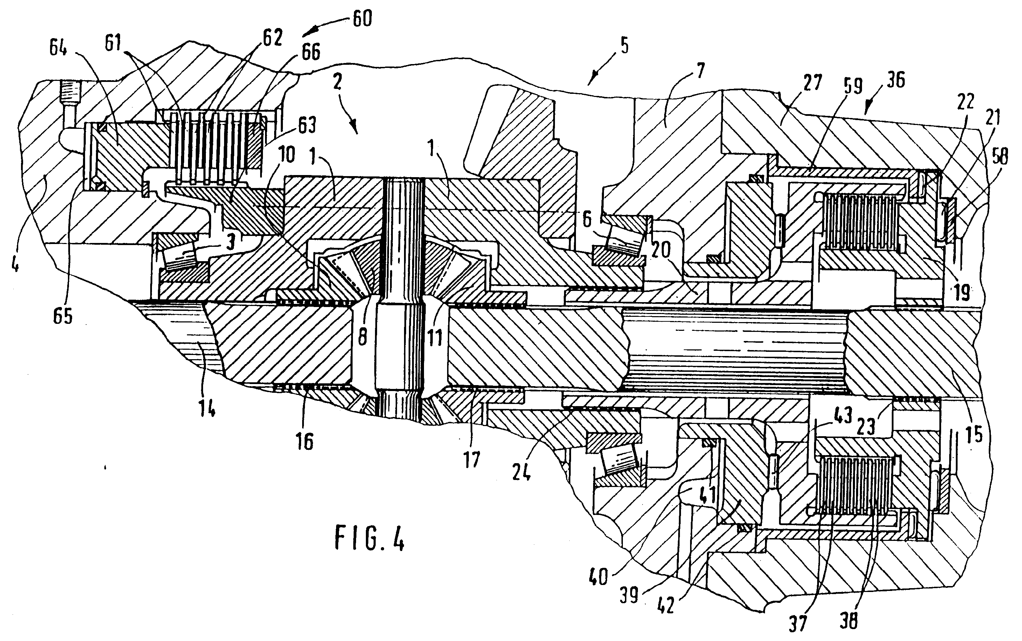

- Fig. 4: zeigt ein Differentialgetriebe nach Anspruch 7.

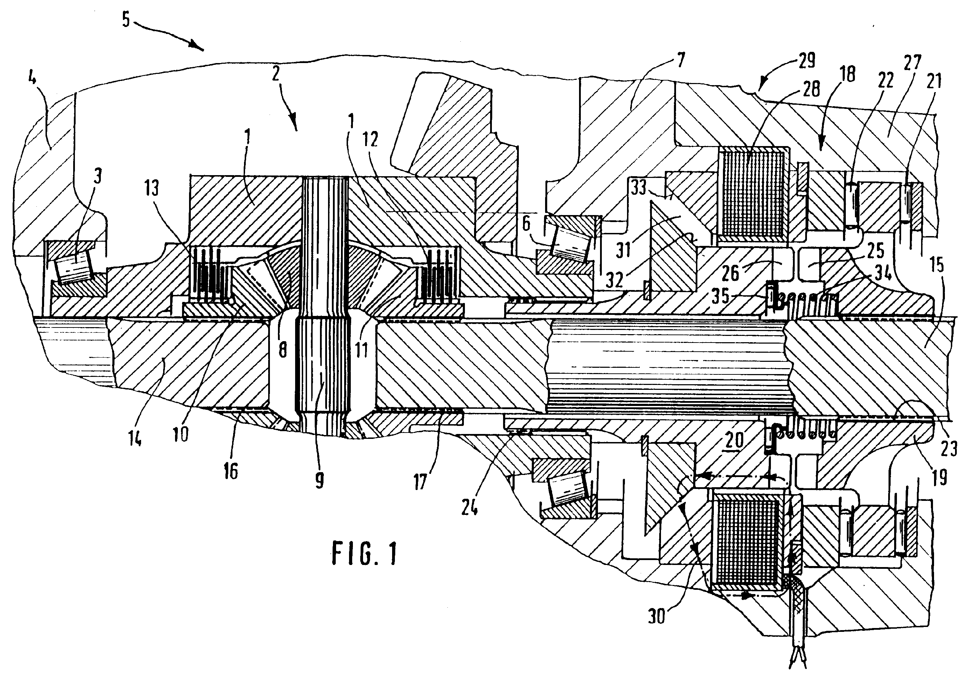

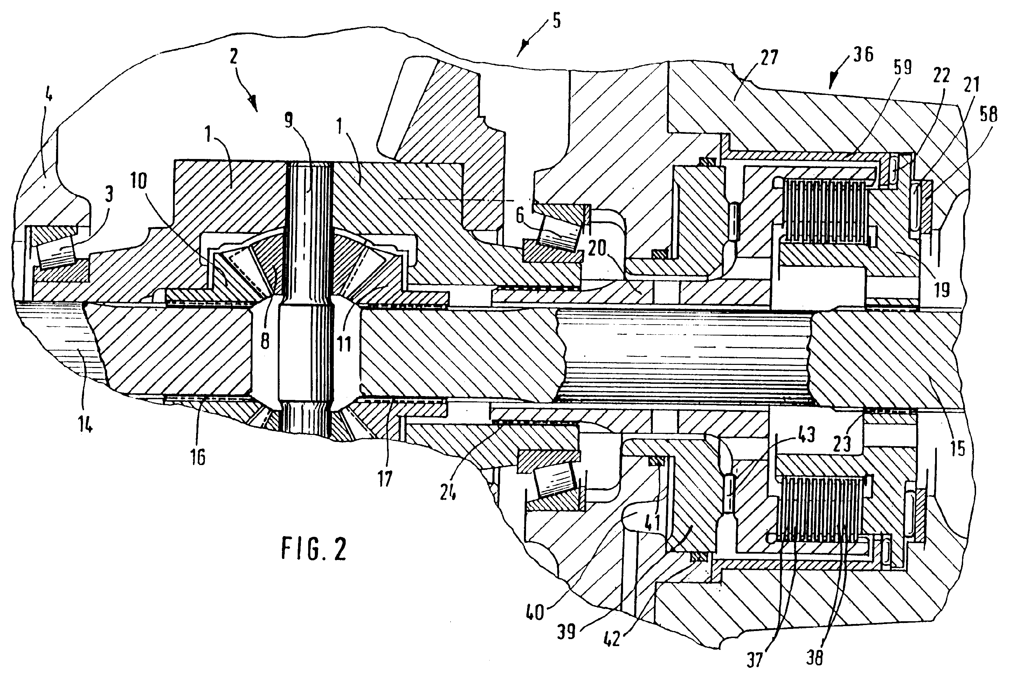

Fig. 1: Ein Planetenträger 1 eines Differentialgetriebes 2 ist in einem ersten Lager 3 in einem ersten Hauptteil 4 eines Getriebegehäuses 5 und in einem zweiten Lager 6 in einem Zwischenringteil 7 des Getriebegehäuses 5 drehbar und axial fest gelagert. Der Planetenträger 1 trägt Planetenräder 8 auf Planetenachsen 9. Der Planetenträger 1 treibt über die Planetenräder 8 ein erstes und ein zweites Zentralrad 10, 11.

Eine erste und eine zweite Reibkupplung 12, 13 verbinden selbsttätig den Planetenträger 1 mit dem ersten und dem zweiten Zentralrad 10, 11.

Das erste und eine zweite Zentralrad 10, 11 treiben über eine erste und eine zweite Abtriebswelle 14, 15 ein erstes und ein zweites Antriebsrad des Fahrzeugs. Mitnahmezähne mit achsparallelen Mitnahmeflächen 16, 17 verbinden die Zentralräder 10, 11 drehfest mit den axial beweglichen Abtriebswellen 14, 15.

Eine betätigbare Klauenkupplung 18 mit einem axial festen Kupplungsteil 19 und einem axial beweglichen Kupplungsteil 20 verbindet den Planetenträger 1 drehfest mit der zweiten Abtriebswelle 15. Axiallager 21, 22 halten den axial festen Kupplungsteil 19 axial fest zu einem zweiten Hauptteil 27 des Getriebegehäuses 5. Mitnahmezähne mit achsparallelen Mitnahmeflächen 23 verbinden den axial festen Kupplungsteil 19 drehfest mit der zweiten Abtriebswelle 15. Mitnahmezähne mit achsparallelen Mitnahmeflächen 24 verbinden den axial beweglichen Kupplungsteil 20 drehfest mit dem Planetenträger 1.

Die Kupplungsteile 19, 20 bilden mit Mitnahmezähnen mit achsparallelen Mitnahmeflächen 25, 26 die schaltbare Klauenkupplung 18.

In dem Getriebegehäuse 5, axial zwischen dem Zwischenringteil 7 und dem zweiten Hauptteil 27 des Getriebegehäuses 5, ist eine Magnetspulse 28 eines Elektromagneten 29 befestigt. Der axial bewegliche Kupplungsteil 20 bildet einen Magnetanker für den Elektromagneten 29. Ein elektrischer Strom in der Magnetspule 28 erzeugt einen Magnetfluß 30 und damit eine axiale Magnetkraft in einem Magnetspalt 31 zwischen einer Kegelfläche 32 des axial beweglichen Kupplungsteils 20 und einer Kegelfläche 33 des Zwischenringteils 7 des Getriebegehäuses 5 und schließt die Klauenkupplung 18 gegen eine Feder 34. Die Feder 34 und ein Axiallager 35 sind axial zwischen den zwei Kupplungsteilen 19, 20 angeordnet.

Fig. 2: Ein Planetenträger 1 eines Differentialgetriebes 2 ist in einem ersten Lager 3 in einem ersten Hauptteil 4 eines Getriebegehäuses 5 und in einem zweiten Lager 6 in einem Zwischenringteil 7 des Getriebegehäuses 5 drehbar und axial fest gelagert. Der Planetenträger 1 treibt über Planetenräder 8 auf Planetenachsen 9 ein erstes und ein zweites Zentralrad 10, 11. Mitnahmezähne mit achsparallelen Mitnahmeflächen 16, 17 verbinden die axial festen Zentralräder 10, 11 drehfest mit den axial beweglichen Abtriebswellen 14, 15.

Eine stufenlos steuerbare Reibkupplung 36 mit einem axial festen Kupplungsteil 19 und einem axial beweglichen Kupplungsteil 20 kann ein stufenlos steuerbares Reibdrehmoment zwischen dem axial festen Planetenträger 1 und der axial beweglichen zweiten Abtriebswelle 15 übertragen.

Axiallager 21, 22 mit Laufringen 58, 59 halten den axial festen Kupplungsteil 19 axial fest zu dem Getriebegehäuse 5. Mitnahmezähne mit achsparallelen Mitnahmeflächen 23 verbinden den axial festen Kupplungsteil 19 drehfest mit der zweiten Abtriebswelle 15. Mitnahmezähne mit achsparallelen Mitnahmeflächen 24 verbinden den axial beweglichen Kupplungsteil 20 drehfest mit dem Planetenträger 1. Die Reibkupplung 36 ist eine Lamellenkupplung mit Außenlamellen 37 in einem Außenlamellenträger und Innenlamellen 38 auf einem Innenlamellenträger. Der axial feste Kupplungsteil 19 bildet den Innenlamellenträger. Der axial bewegliche Kupplungsteil 20 bildet den Außenlamellenträger.

Der Zwischenringteil 7 des Getriebegehäuses 5 bildet einen Zylinder für einen Kolben 39 und mit dem Kolben 39 eine Kammer 40. Dichtringe 41, 42 dichten radial zwischen dem Kolben 39 und dem Zwischenringteil 7. Druckfluid in der Kammer 40 drückt den Kolben 39 über ein Axiallager 43 gegen den axial beweglichen Kupplungsteil 20 und den axial beweglichen Kupplungsteil 20 über die Außenlamellen 37 und die Innenlamellen 38 gegen den axial festen Kupplungsteil 19 und erzeugt damit ein Reibdrehmoment der Reibkupplung 36.

Fig. 3: Ein Differentialgetriebe 2 nach Fig. 2 wird hier ergänzt durch zwei Bremsen 45, 46.

Eine erste Bremse 45 überträgt ein stufenlos steuerbares Bremsdrehmoment von der ersten Abtriebswelle 14 auf den ersten Hauptteil 4 des Getriebegehäuses 5. Eine zweite Bremse 46 überträgt ein stufenlos steuerbares Bremsdrehmoment von der zweiten Abtriebswelle 15 auf den zweiten Hauptteil 27 des Getriebegehäuses 5.

Jede Bremse 45, 46 ist eine Lamellenbremse mit Außenlamellen 47 in einem Außenlamellenträger 49 und Innenlamellen 48 auf einem Innenlamellenträger 50. Jeder Innenlamellenträger 50 ist über Mitnahmezähne mit achsparallelen Mitnahmeflächen 57 drehfest mit einer Abtriebswelle 14, 15 verbunden. Jeder Außenlamellenträger 49 ist fest in einem Hauptteil 4, 27 des Getriebegehäuses 5. Jeder Außenlamellenträger 49 bildet einen Zylinder für einen Kolben 51 und mit dem Kolben 51 eine Kammer 52 für Druckfluid. Dichtringe 53, 54 dichten radial zwischen dem Kolben 51 und dem Außenlamellenträger 49. Druckfluid in der Kammer 52 drückt den Kolben 51 gegen ein axial bewegliches erstes Endglied 55 und das erste Endglied 55 über die Außenlamellen 47 und Innenlamellen 48 gegen ein axial festes zweites Endglied der Bremse 45, 46 und erzeugt damit das Bremsdrehmoment der Bremse 45, 46.

Der Lagerflansch 44 für das erste Lager 3 für den Planententräger 1 bildet das zweite Endglied der ersten Bremse 45. Ein Stützring 56 für das Axiallager 21 für den ersten Kupplungsteil 19 der Reibkupplung 36 ist fest in dem zweiten Hauptteil 27 des Getriebegehäuses 5 und bildet das zweite Endglied der zweiten Bremse 46.

Fig. 4: Eine stufenlos steuerbare Reibkupplung 36 mit einem axial festen Kupplungsteil 19 und einem axial beweglichen Kupplungsteil 20 überträgt ein stufenlos steuerbares Reibdrehmoment zwischen dem axial festen Planetenträger 1 und der axial beweglichen Abtriebswelle 15.

Eine Bremse 60 überträgt ein stufenlos steuerbares Bremsdrehmoment von dem Planetenträger 1 auf den ersten Hauptteil 4 des Getriebegehäuses 5. Die Bremse 60 ist eine Lamellenbremse mit Außenlamellen 61 in einem Außenlamellenträger und Innenlamellen 62 auf einem Innenlamellenträger 63. Der erste Hauptteil 4 des Getriebegehäuses 5 bildet den Außenlamellenträger. Der Innenlamellenträger 63 ist fest, aber lösbar mit dem Planetenträger 1 verbunden. Der erste Hauptteil 4 des Getriebegehäuses 5 bildet einen Zylinder für einen Kolben 64 und mit dem Kolben 64 eine Kammer 65. Der Kolben 64 bildet ein Betätigungsglied für die Bremse 60. Druckfluid in der Kammer 65 drückt über den Kolben 64 die Außenlamellen 61 und die Innenlamellen 62 zusammen gegen ein festes Endglied 66 und erzeugt ein Bremsdrehmoment der Bremse 60.

Außer den vier in der Zeichnung dargestellten Ausführungsbeispielen sind im Rahmen der Erfindung auch noch viele andere Konstruktionen möglich, bei denen die Merkmale des Anspruchs 1 mit Merkmalen der übrigen Ansprüche anders vereint sind.

Beispielsweise kann das in Fig. 1 dargestellte Differentialgetriebe 2 mit der Klauenkupplung 18 zusätzlich mit zwei Bremsen 45, 46 wie in Fig. 3 ausgerüstet werden. Oder eins der in Fig. 2 oder Fig. 3 dargestellten Differentialgetriebe 2 kann zusätzlich auf der anderen Seite des Planetenträgers 1 ausgerüstet werden mit einem zweiten Zwischenringteil und mit einer zweiten Reibkupplung, die den Planetenträger 1 drehfest mit der ersten Abtriebswelle 14 verbindet.

Oder der erste und der zweite Hauptteil 4, 27 bilden zusätzlich die Außenlamellenträger 49 für die Außenlamellen 47 und die Zylinder für die Kolben 51 (Fig. 3). Oder, in umgekehrter Weise, ein besonderes Bauteil ist in dem Getriebegehäuse 5 befestigt und bildet den Außenlamellenträger für die Außenlamellen 61 und den Zylinder für den Kolben 64 (Fig. 4).

Druckfluid für die Kammern 40, 52 und 65 für die Reibkupplung 36 (Fig. 2 bis 4) und die Bremsen 45, 46 (Fig. 3) und 60 (Fig. 4) kann von einer beliebigen Quelle geliefert werden. Das Druckfluid kann eine Flüssigkeit oder ein Gas sein.

### Bezugszeichen

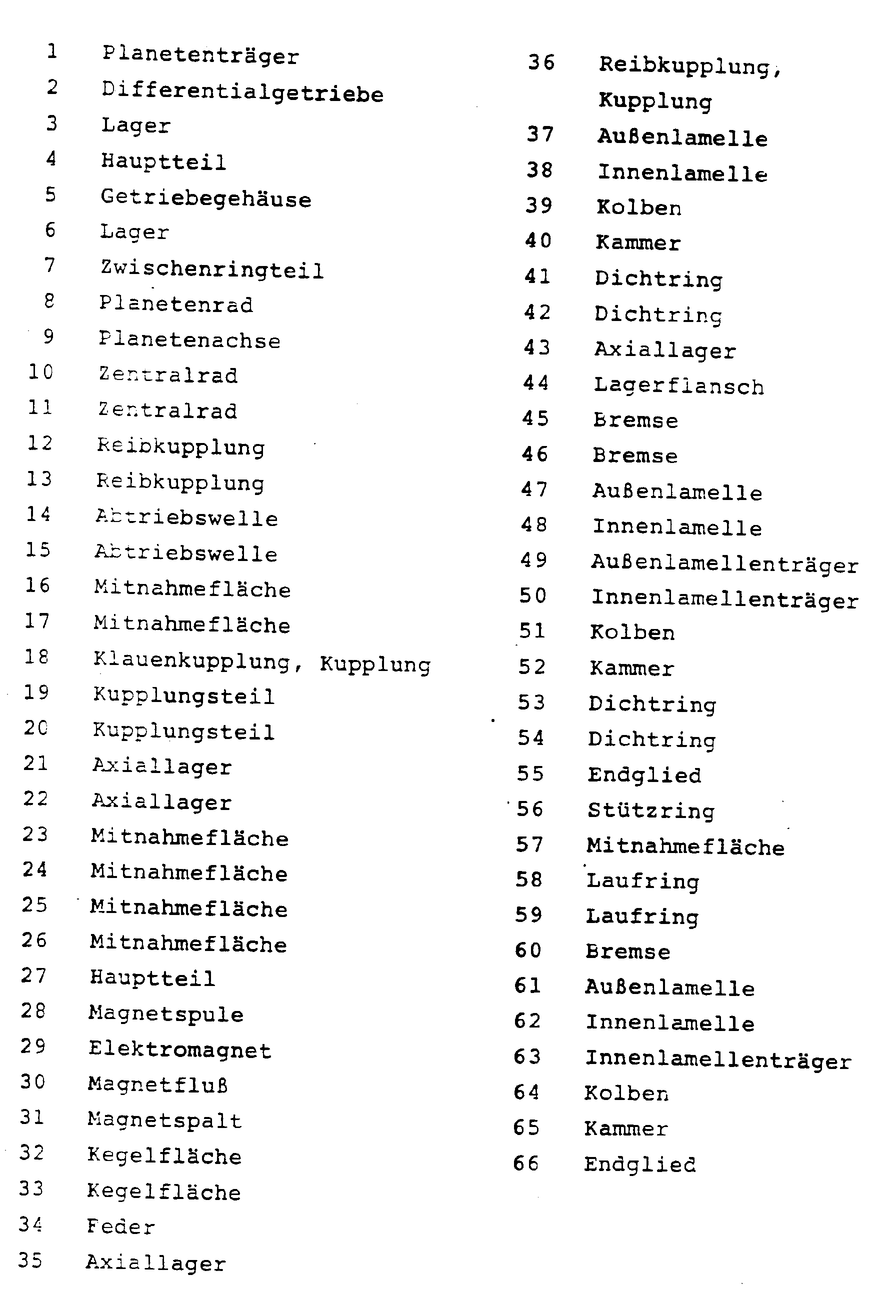

## Patentansprüche

1. Differentialgetriebe mit den Merkmalen:
- Ein axial fester Planetenträger (1) treibt über mindestens ein Planetenrad (8) zwei Zentralräder (10, 11),
- jedes Zentralrad (10, 11) treibt eine axial bewegliche Abtriebswelle (14, 15),
- mindestens eine betätigbare Kupplung (18 oder 36) mit einem axial festen und einem axial beweglichen Kupplungsteil (19, 20) verbindet den Planetenträger (1) mit einer Abtriebswelle (15),
- der feste Kupplungsteil (19) ist drehfest mit der Abtriebswelle (15) verbunden,
- ein Getriebegehäuse (5) hat einen Zwischenringteil (7) zwischen einem ersten und zweiten Hauptteil (4, 27);
- der Planetenträger (1) ist mit einem ersten Lager (3) in dem ersten Hauptteil (4) und mit einem zweiten Lager (6) in dem Zwischenringteil (7) gelagert,
- der bewegliche Kupplungsteil (20) ist drehfest mit dem Planetenträger (1) verbunden,
**gekennzeichnet** durch die Merkmale:
- der feste Kupplungsteil (19) ist mit zwei Axiallagern (21, 22) axial fest zu dem zweiten Hauptteil (27) gehalten.

2. Differentialgetriebe nach Anspruch 1 mit den Merkmalen:
- Die betätigbare Kupplung (36) ist eine Reibkupplung;
- der Zwischenringteil (7) bildet einen Zylinder für einen Kolben (39) und mit dem Kolben (39) eine Kammer (40);
- Druckfluid in der Kammer (40) erzeugt ein Reibdrehmoment der Kupplung (36).

3. Differentialgetriebe nach Anspruch 2 mit den Merkmalen:
- Die Kupplung (36) ist eine Lamellenkupplung mit Außenlamellen (37) in einem Außenlamellenträger und Innenlamellen (38) auf einem Innenlamellenträger;
- der bewegliche Kupplungsteil (20) bildet den Außenlamellenträger;
- der feste Kupplungsteil (19) bildet den Innenlamellenträger.

4. Differentialgetriebe nach Anspruch 1 mit den Merkmalen:
- Eine erste Bremse (45) verbindet eine erste Abtriebswelle (14) mit dem ersten Hauptteil (4);
- eine zweite Bremse (46) verbindet die zweite Abtriebswelle (15) mit dem zweiten Hauptteil (27).

5. Differentialgetriebe nach Anspruch 2 mit den Merkmalen:
- Eine Bremse (60) verbindet den Planetenträger (1) mit dem ersten Hauptteil (4);
- eine Logikeinrichtung steuert die Reibkupplung (36), wenn die Bremse (60) betätigt wird.

## Claims

1. Differential gearing with the features:
- An axially fixed planet support (1) drives two central gears (10, 11) via at least one planet gear (8),
- each central gear (10, 11) drives an axially movable output shaft (14, 15),
- at least one operable clutch (18 or 36) with an axially fixed and an axially movable clutch part (19, 20) connects the planet support (1) with a drive shaft (15),
- the fixed clutch part (19) is rotationally rigidly connected with the drive shaft (15),
- a gearing housing (5) comprises an intermediate ring element (7) between a first and second main part (4, 27),
- the planet support (1) is mounted with a first bearing (3) in the first main part (4) and with a second bearing (6) in the intermediate ring element (7),
- the movable clutch part (20) is rotationally rigidly connected with the planet support (1),
characterised by the features:
- the fixed clutch part (19) is held axially fixed relative to the second main part (27) by means of two axial bearings (21, 22).

2. Differential gearing according to claim 1 with the features:
- The operable clutch (36) is a friction clutch,
- the intermediate ring element (7) forms a cylinder for a piston (39) and together with the piston (39) forms a chamber (40),
- hydraulic fluid in the chamber (40) generates frictional torque in the clutch (36).

3. Differential gearing according to claim 2 with the features:
- The clutch (36) is a multi-disc clutch with outer discs (37) in an outer disc support and inner discs (38) on an inner disc support,
- the movable clutch part (20) forms the outer disc support,
- the fixed clutch part (19) forms the inner disc support.

4. Differential gearing according to claim 1 with the features:
- A first brake (45) connects a first output shaft (14) with the first main part (4),
- a second brake (46) connects the second output shaft (15) with the second main part (27).

5. Differential gearing according to claim 2 with the features:
- A brake (60) connects the planet support (1) with the first main part (4),
- a logic device controls the friction clutch (36) when the brake (60) is actuated.

## Revendications

1. Différentiel presentant les caractéristiques suivantes:
- un porte-satellites (1) inamovible dans le sens axial entraîne deux planétaires (10, 11) par l'intermédiaire d'au moins un satellite (8),
- chaque planétaire (10, 11) entraîne un arbre de sortie (14, 15) amovible dans le sens axial,
- au moins un embrayage actionnable (18 ou 36) avec une pièce d'embrayage inamovible dans le sens axial et une pièce d'embrayage amovible dans le sens axial (19, 20) relie le porte-satellites (1) à un arbre de sortie (15),
- la pièce d'embrayage inamovible (19) est reliée à l'arbre de sortie (15) de façon à en être solidaire en rotation,
- un carter de boîte (5) comporte une partie bague intermédiaire (7) entre une première et une deuxième partie principale (4, 27);
- le porte-satellites (1) est logé avec un premier palier (3) dans la première partie principale (4) et avec un deuxième palier (6) dans la partie bague intermédiaire (7),
- la pièce d'embrayage amovible (20) est reliée au porte-satellites (1) de façon à en être solidaire en torsion,
**caractérisé** en ce que:
- la pièce d'embrayage inamovible (19) est maintenue de façon inamovible dans le sens axial par rapport à la deuxième partie principale (27) au moyen de deux paliers de butée (21, 22).

2. Différentiel selon la revendication 1, comportant les caractéristiques suivantes:
- l'embrayage actionnable (36) est un embrayage à friction;
- la partie bague intermédiaire (7) constitue un cylindre pour un piston (39) et, avec le piston (39), une chambre (40);
- un fluide de pression se trouvant dans la chambre (40) crée un couple de friction de l'embrayage (36).

3. Differentiel selon la revendication 2, comportant les caractéristiques suivantes:
- l'embrayage (36) est un embrayage à disques avec des disques extérieurs (37) dans un porte-disques extérieurs et des disques intérieurs (38) sur un porte-disques intérieurs;
- la pièce d'embrayage amovible (20) constitue le porte-disques intérieurs.

4. Différentiel selon la revendication 1, comportant les caractéristiques suivantes:
- un premier frein (45) relie un premier arbre d'entrée (14) à la première partie principale (4);
- un deuxième frein (46) relie le deuxième arbre d'entrée (15) à la deuxième partie principale (27).

5. Differentiel selon la revendication 2, comportant les caractéristiques suivantes:
- un frein (60) relie le porte-satellites (1) à la première partie principale (4);
- un dispositif logique commande l'embrayage à friction (36) lorsque le frein (60) est actionné.
